# EUROPEAN PATENT APPLICATION

(11) **EP 4 723 729 A1**
(43) Date of publication of application: **08.04.2026**
(21) Application number: 24824858.5
(22) Date of filing: 05.01.2024
(51) Int. Cl.: H04W 28/20

(54) **METHOD FOR ADJUSTING COMMUNICATION BANDWIDTH, ELECTRONIC DEVICE, AND READABLE STORAGE MEDIUM**

(30) Priority: 20.06.2023 CN 202310740086
(71) Applicant: ZTE CORPORATION, Shenzhen, Guangdong 518057 (CN)
(72) Inventor: WANG, Xintai, Shenzhen, Guangdong 518057 (CN); YUAN, Zhigui, Shenzhen, Guangdong 518057 (CN); TANG, Xue, Shenzhen, Guangdong 518057 (CN); LI, Xiaotong, Shenzhen, Guangdong 518057 (CN)
(74) Representative: Ziebig Hengelhaupt Intellectual Property Attorneys Patentanwaltskanzlei PartGmbB
(86) International application number: PCT/CN2024/070894
(87) International publication number: WO 2024/259954

(57) **Abstract**

The present application discloses a method for adjusting a communication bandwidth, an electronic device, and a readable storage medium. The solution provided by the present application comprises: acquiring communication transmission rate information between a user terminal and a target base station in a historical time period and bandwidth information configured by the target base station for the user terminal in the historical time period; executing transmission rate learning according to the communication transmission rate information so as to determine a predicted transmission rate of the user terminal in a future time period; on the basis of a preset grading rule, determining a first communication transmission rate grade corresponding to the bandwidth information and a second communication transmission rate grade corresponding to the predicted transmission rate; and if the first communication transmission rate grade is inconsistent with the second communication transmission rate grade, configuring the target base station on the basis of the second communication transmission rate grade, so as to allocate a bandwidth resource matching the second communication transmission rate grade to the user terminal in the future time period.

## Description

### CROSS REFERENCE TO RELATED APPLICATIONS

This application claims priority to Chinese Patent Application No. 202310740086.0 filed on June 20, 2023, entitled "Method for adjusting communication bandwidth, electronic device, and readable storage medium", the entirety of which is incorporated herein by reference.

### TECHNICAL FIELD

The present application relates to the technical field of communications, and in particular to a method for adjusting a communication bandwidth, an electronic device, and a readable storage medium.

### BACKGROUD

In the field of communications technology, communication users have different needs for different service types and scenarios. Communication base stations need to provide users with communication resources, so as to meet diverse needs of communication users.

For example, there are mainly two types of service rate guarantees in the 5G communication network. One is the guaranteed bit rate (GBR) service, of which the bandwidth guarantee requires that the core network carries an uplink and downlink guaranteed flow bit rate (GFBR) notification to a base station and the base station provides guarantee according the notified rate. The other is non-guaranteed bit rate (NGBR) service, which does not have the guaranteed rate according to the 3rd Generation Partnership Project (3GPP) standard. Instead, manufacturers in the industry configure a guaranteed rate for the base station according to a 5G quality of service identifier (5G QoS Identifier, 5QI), which achieves an effect similar to that of a GFBR, so that services on 5QI of NGBR can have certain rate guarantee.

However, in actual applications, the communication resources provided by a base station for a user terminal can hardly match the actual communication resources required by the terminal, making it difficult to meet needs of service communication. Taking the prioritized bit rate (PBR) as an example, if a high PBR is configured, a base station needs to reserve resources to meet the PBR, and thus fewer service users can be accommodated in the air interfaces. If a lower PBR is configured, resources are limited, the base station gives priority to allocating resources that satisfies the PBR, and thus fails to guarantee the service bandwidth.

How to improve the flexibility and effectiveness of communication bandwidth adjustment is the technical problem to be solved by this application.

### SUMMARY

The purpose of the embodiments of the present application is to provide a method for adjusting a communication bandwidth, an electronic device, and a readable storage medium, so as to improve flexibility and effectiveness of communication bandwidth adjustment.

In a first aspect, there is provided a method for adjusting a communication bandwidth, including: acquiring communication transmission rate information between a user terminal and a target base station in a historical time period and bandwidth information configured by the target base station for the user terminal in the historical time period; executing transmission rate learning according to the communication transmission rate information, so as to determine a predicted transmission rate of the user terminal in a future time period; on the basis of a preset grading rule, determining a first communication transmission rate grade corresponding to the bandwidth information and a second communication transmission rate grade corresponding to the predicted transmission rate; and upon the condition that the first communication transmission rate grade is inconsistent with the second communication transmission rate grade, configuring the target base station on the basis of the second communication transmission rate grade, so as to allocate a bandwidth resource matching the second communication transmission rate grade to the user terminal in the future time period.

In a second aspect, there is provided a device for adjusting a communication bandwidth, including: an acquisition module for acquiring communication transmission rate information between a user terminal and a target base station in a historical time period and bandwidth information configured by the target base station for the user terminal in the historical time period; a first determination module for executing transmission rate learning according to the communication transmission rate information, so as to determine a predicted transmission rate of the user terminal in a future time period; a second determination module for determining, on the basis of a preset grading rule, a first communication transmission rate grade corresponding to the bandwidth information and a second communication transmission rate grade corresponding to the predicted transmission rate; and a configuration module, for configuring, upon the condition that the first communication transmission rate grade is inconsistent with the second communication transmission rate grade, the target base station on the basis of the second communication transmission rate grade, so as to allocate a bandwidth resource matching the second communication transmission rate grade to the user terminal in the future time period.

In a third aspect, there is provided an electronic device, the electronic device includes a processor, a memory, and a computer program that is stored on the memory and is executable on the processor, and the computer program, when executed by the processor, implements the steps of the method of the first aspect.

In a fourth aspect, there is provided a computer-readable storage medium, the computer-readable storage medium stores a computer program, and the computer program, when executed by the processor, implements the steps of the method of the first aspect.

### BRIEF DESCRIPTION OF THE DRAWINGS

The drawings illustrated here are used to provide further understanding of the present application and constitute a part of thereof, and the illustrative embodiments and corresponding descriptions of the present application are used to explain the present application but do not constitute an improper limitation on the present application. In the drawings:
FIG. 1a is a first schematic flow chart of a method for adjusting a communication bandwidth provided by embodiments of the present application.
FIG. 1b is a schematic diagram of an application scene of a method for adjusting a communication bandwidth provided by embodiments of the present application.
FIG. 2 is a second schematic flow chart of a method for adjusting a communication bandwidth provided by embodiments of the present application.
FIG. 3a is a third schematic flow chart of a method for adjusting a communication bandwidth provided by embodiments of the present application.
FIG. 3b is a schematic diagram of acquiring a plurality of BSRs of a method for adjusting a communication bandwidth provided by embodiments of the present application.
FIG. 4a is a fourth schematic flow chart of a method for adjusting a communication bandwidth provided by embodiments of the present application.
FIG. 4b is a schematic diagram of acquiring a plurality of RLC PDUs of a method for adjusting a communication bandwidth provided by embodiments of the present application.
FIG. 5 is a fifth schematic flow chart of a method for adjusting a communication bandwidth provided by embodiments of the present application.
FIG. 6 is a sixth schematic flow chart of a method for adjusting a communication bandwidth provided by embodiments of the present application.
FIG. 7a is a seventh schematic flow chart of a method for adjusting a communication bandwidth provided by embodiments of the present application.
FIG. 7b is a schematic flow chart of downlink bandwidth adjustment of a method for adjusting a communication bandwidth provided by embodiments of the present application.
FIG. 8a is an eighth schematic flow chart of a method for adjusting a communication bandwidth provided by embodiments of the present application.
FIG. 8b is a schematic flow chart of uplink bandwidth adjustment of a method for adjusting a communication bandwidth provided by embodiments of the present application.
FIG. 9a is a schematic structural diagram of a device for adjusting a communication bandwidth provided by embodiments of the present application.
FIG. 9b is a schematic system diagram of a device for adjusting a communication bandwidth provided by embodiments of the present application.
FIG. 10 is another schematic structural diagram of a device for adjusting a communication bandwidth provided by embodiments of the present application.

### DETAILED DESCRIPTION

Technical solutions in embodiments of the application will be described clearly and thoroughly below with reference to the accompanying drawings in embodiments of the application. Apparently, the embodiments described are part of the embodiments of the application rather than all of the embodiments. All other embodiments obtained by a person skilled in the art without creative work based on embodiments in the application shall fall within the scope of the application. The reference numbers in the drawings of the present application are only used to distinguish various steps in the solutions, and are not used to define the execution order of various steps, and the specific execution order is based on the description in the specification.

In the field of communications, user terminals have increasingly diverse communication service demands, and the bandwidth resources required by users fluctuate widely, which makes it difficult to effectively guarantee the communication service demands of user-side services in the related art.

For example, extended reality (XR), which includes virtual reality (VR), augmented reality (AR), and mixed reality (MR), acts as the foundational technology of the metaverse. When combined with mobile communications, XR can provide users with a variety of applications and services, and enables immersive video experience in virtual spaces within mobile scenarios. In 5G, 5G-A, and 6G communication systems, the complex requirements for communication resources of XR can be hardly met by existing technology.

In some cases, the XR service has the following characteristics: end-to-end time delay is short, ranging from approximately 10 ms to tens of milliseconds; the bandwidth varies widely from a few megabits to hundreds of megabits; the code rate also varies in different scenarios; the same service in different user terminals may have different resolution, frame rate and refresh rate as well as different output rate of a server due to the fact that the server needs to perform encoding by using the resolution and frame rate that can be supported by a headset based on the decoding capability of the headset; and a server may also adjust the code rate adaptively during congestion of the air interface.

The code rate of the XR service varies due to the aforementioned factors, which makes it different to effectively provide communication bandwidth resources in the related art. In addition to XR services, other 5G-A services also exhibit similar characteristics, for example, in the adaptive video surveillance service, the video encoding method and resolution adopted by video surveillance vary depending on the capabilities of different terminals, so that the code rate of the video surveillance service is not fixed. This poses a challenge to 5G network in guaranteeing the bandwidth of XR service and other 5G-A services. Besides, if the bandwidth cannot be guaranteed, data may be accumulated, and the time delay is hard to guarantee.

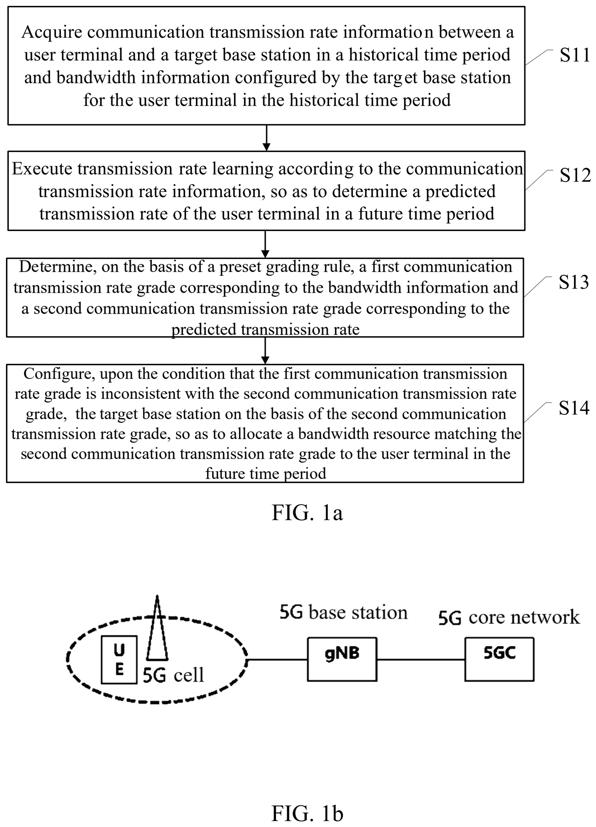

In order to solve the problems existing in the related art, the embodiments of the present application provide a method for adjusting a communication bandwidth. The flow chart of the method provided by the present application is shown in FIG. 1a, and an application scenario of the method provided by the present application is shown in FIG. 1b. This embodiment is illustrated by using the 5G application scenario as an example, however in actual applications, this solution may also be applied to 5G-A, 6G wireless cellular networking or other communication scenarios.

FIG. 1b shows a system including a 5G base station, the method provided by the present application may be performed by a base station or other devices connected to a base station. The solutions provided in embodiments of the present application will be described in detail below in combination with actual application scenarios.

In actual applications, the core network usually allocates different 5QIs to different services, and service rate guarantee may be divided into uplink and downlink aspects. With respect to the guarantee of an uplink service rate, a base station configures a user equipment (UE) with a PBR of a logical channel according to a logical channel mapped by 5QI, which is generally configured according to GFRB, so as to instruct a terminal to reassemble a data packet according to this rate, thereby guaranteeing the uplink GFRB. There is generally not standard of the downlink guarantee mechanism, and a base station is responsible for downlink guarantee. Usually, the base station allocates resources based on the downlink GFBR, so that the downlink rate is guaranteed. It should be noted that the GFBR described in embodiments of the present application is a parameter name carried from a core network in the standard, and PBR is parameter name of the air interface guaranteed rate in the standard, and the two have equivalent functions in the embodiments. In addition, the above-mentioned guaranteed rate may also be called the prioritized rate.

When a terminal is to send uplink data, the terminal usually reports the amount of data to be sent to the uplink terminal by sending a buffer status report (BSR). If the terminal has a plurality of logical channels, depending on configuration for the UE by the base station, the BSR can be reported according to a logical channel group. When the BSR is packaged according to the logical channel group, the number of bytes in the BSR equals the total number of data to be sent in each logical channel in the logical channel group.

In some cases, when the UE needs to send a BSR, the UE inserts a BSR control unit in the packet data unit (PDU) at the medium access control (MAC) layer, so as to notify the network side of the amount of data that need to be sent currently in one or several logical channel groups of the UE, thereby requesting the base station to allocate corresponding amount of communication resources.

However, in the process of guaranteeing uplink and downlink rates between the base station and UE for the above-mentioned GBR and NGBR services, there is a problem that PBR is not the actual service bandwidth requirement of the UE, resulting in that the service rate cannot be guaranteed accurately.

In some cases, for 5QI of GBR, the GFBR is carried by a core network to a base station, the core network relies on the Application Function (AF) network element to acquire the GFBR, and the AF is usually developed by third-party applications. Usually, there is no suitable commercial AF for a target service. Upon the condition that the core network cannot acquire the actual bandwidth requirement of the third-party application, only a service template can be relied on, and a generally static guaranteed rate is set, which causes that the resources allocated by the base station based on the guaranteed rate cannot meet the actual service requirements of the user terminal.

For 5QI of NGBR, the bandwidth is not guaranteed, and a standard interface of the core network does not carry the guaranteed rate. In actual applications, a base station often statically configures the PBR rate based on 5QI, which is difficult to meet the actual service requirements of a user-side.

The above-mentioned method of configuring static rates based on 5QI results in a significant difference between the actual service rate and the provided communication resources. Furthermore, the GFBR carried by the core network tends to not taking overhead at the Packet Data Convergence Protocol (PDCP) and Radio Link Control (RLC) layers into account, and for small-packet GBR services, the actual service rate can differ significantly from the guaranteed rate. If a high PBR is configured, a base station needs to reserve resources to meet the PBR, and thus fewer users of the XR service can be accommodated in the air interfaces. If a lower PBR is configured, resources are limited, the base station gives priority to allocating resources that satisfies the PBR, and thus fails to guarantee the bandwidth of the XR service. Therefore, it is difficult for a communication system to flexibly and effectively adjust the communication bandwidth resources provided to a user terminal, the service experience of the user terminal is hard to guarantee.

To further illustrate the solution provided by the present application, the following application scenario is illustrated in combination with FIG. 1b, and an execution subject in this embodiment may be a base station. The gNB is a 5G base station and may include a control plane, user plane, and a baseband unit, and the control plane is responsible for UE signaling and other signaling. In this embodiment, when the uplink PBR needs to be changed, a Radio Resource Control (RRC) connection reconfiguration message is sent by the control plane, so as to notify the UE. The user plane is responsible for processing uplink and downlink service data, which primarily involves GPRS Tunnelling Protocol for the user plane (GTP-U) processing, Service Data Adaptation Protocol (SDAP) processing, PDCP processing, and RLC processing at the user level. The base station can learn PBR by itself by learning from each protocol layer, and finally use the average PBR rate of the RLC layer. The baseband unit is responsible for scheduling uplink and downlink data, allocating resources to meet requirements of guaranteed rates, and receiving the BSR reported by the UE.

The 5GC is a core network of 5G, which is responsible for processing signaling and service data at the Non-Access Stratum (NAS) layer of UE. During processing of the GBR service, the core network would carry a GFBR notification statically configured in the service template to the base station.

Referring to FIG. 1a, the method provided in embodiments of the present application includes the following.

At S11: communication transmission rate information between a user terminal and a target base station in a historical time period and bandwidth information configured by the target base station for the user terminal in the historical time period are acquired.

In embodiments of the present application, the communication transmission rate information between the user terminal and the target base station in the historical time period and the bandwidth information configured by the target base station for the user terminal in the historical time period may be acquired in advance. The length of the historical time period may be preset. In actual applications, a time period close to the current moment may be selected as the historical time period, so as to improve the accuracy of the predicted transmission rate. For example, the 20 minutes before the current moment may be used as the historical time period. Both the communication transmission rate information and the bandwidth information corresponding to the historical time period are used to execute transmission rate learning for the future 20 minutes after the current moment, so as to obtain a predicted transmission rate for the next 20 minutes.

The communication transmission rate information is used to represent information of the actual rate of communication transmission performed by the user terminal, and may include uplink communication transmission rate information and downlink communication transmission rate information. The bandwidth information configured by the base station for the user terminal is used to represents the communication bandwidth resources allocated by the base station to the user terminal during the historical time period.

By acquiring communication transmission rate information and bandwidth information, actual service communication information of the user terminal and communication resources allocated by the base station to the user terminal during the historical time period can be obtained, and these two types of information may serve as the data basis for analyzing whether communication resources need to be adjusted in subsequent steps.

At S12: transmission rate learning is executed according to the communication transmission rate information, so as to determine a predicted transmission rate of the user terminal in a future time period.

In this step, the transmission rate in the future time period is predicted based on the actual communication transmission rate information of the user terminal during the historical time period, wherein the start time of the future time period is after the end time of the historical time period. In some cases, the predicted transmission rate in the future time period may be predicted based on the increasing or decreasing trend of the communication transmission rate during the historical time period.

In embodiments of the present application, the uplink and downlink transmission rates may be predicted separately. The predicted uplink transmission rate may be predicted based on the amount of uplink scheduling request data or the uplink service rate when the network is idle. The predicted downlink transmission rate may be predicted based on the downlink average service rate of the target 5QI received in the GTP-U tunnel.

At S13: a first communication transmission rate grade corresponding to the bandwidth information and a second communication transmission rate grade corresponding to the predicted transmission rate are determined on the basis of a preset grading rule.

The preset grading rule may be a preset rule. For example, a theoretical total transmission rate interval is divided into a plurality of transmission rate intervals in advance, and each interval is labeled with a corresponding grade. Optionally, the preset transmission rate intervals are uniformly set. During execution of this solution, the grade of the interval corresponding to the transmission rate included in the bandwidth information is determined as the first communication transmission rate grade, and the grade of the interval to which the predicted transmission rate belongs is determined as the second communication transmission rate grade.

At S14: upon the condition that the first communication transmission rate grade is inconsistent with the second communication transmission rate grade, the target base station is configured on the basis of the second communication transmission rate grade, so as to allocate a bandwidth resource matching the second communication transmission rate grade to the user terminal in the future time period.

In this step, upon the condition that the first communication transmission rate grade is inconsistent with the second communication transmission rate grade, it indicates that the communication resources allocated by the base station to the user terminal in the historical time period do not match the communication resources required by the user terminal in the future time period, which may cause that communication resources cannot meet the requirements of the user terminal or communication resources are wasted. On this basis, in this step, the target base station is configured based on the second communication transmission rate grade, and thus, the target base station is instructed to allocate suitable bandwidth resources to the user terminal in the future time period.

The bandwidth resources are adjusted according to the second communication transmission rate grade, so that the adjusted bandwidth resources meet actual requirements of the user terminal, and the situation that the allocated bandwidth resource are too many or too few can be avoided. Furthermore, in this solution, the bandwidth resources are adjusted by using the preset grading rule, so that when the actual communication rate of the user terminal fluctuates slightly, adjustment is not performed frequently, the overall stability of the communication system is improved, and the actual service communication requirements of the user terminal can be effectively met.

Based on the solutions provided in the above-mentioned embodiments, optionally, the bandwidth information includes the guaranteed rate of a logical channel of a target service priority.

In order to effectively guarantee the target service of the user terminal in a targeted manner, the priority corresponding to the target service may be acquired in advance, and in this instance, the service priority is represented by 5QI. For example, if the target service is an XR service, the 5QI list corresponding to the XR service may be acquired in advance. In actual applications, one target service may correspond to a plurality of 5QIs, for example, XR may correspond to five 5QIs which may be assigned and allocated by the core network in advance. In this solution, the communication requirements of the target service may be guaranteed by guaranteeing logical channels corresponding to these 5QIs.

In addition, the target services to be guaranteed may be flexibly changed based on actual requirements. For example, the 5QI corresponding to a first target service is guaranteed at one period of time, and at another period of time later, the 5QI corresponding to a second target service is guaranteed. Thus, in actual applications, the actual guaranteed services can be flexibly adjusted, and the service requirements of the user terminal can be effectively met.

In actual implementation, the 5QI list used by the XR service may be configured in advance by a configuration unit of the base station, and the uplink and downlink PBR self-learning switch may be enabled for 5QI configuration, uplink/downlink rate grades are configured, the adjustment period of PBR self-learning is configured, the bandwidth adjustment is performed periodically, and the above configuration parameters are passed to the control plane of the base station, so that the user plane and the baseband unit are notified by the control plane.

Subsequently, based on the above configuration parameters, the transmission rate of 5QI in UE which accesses XR in the cell is learned, and a learning result is passed to a rate grade evaluation module, so as to determine whether it is necessary to adjust the bandwidth resources.

By the solution provided in the embodiment of the present application, communication transmission rate information between a user terminal and a target base station in a historical time period and bandwidth information configured by the target base station for the user terminal in the historical time period are acquired. Then, transmission rate learning is executed according to the communication transmission rate information so as to determine a predicted transmission rate of the user terminal in a future time period. Subsequently, a first communication transmission rate grade corresponding to the bandwidth information and a second communication transmission rate grade corresponding to the predicted transmission rate are determined on the basis of a preset grading rule. Upon the condition that the first communication transmission rate grade is inconsistent with the second communication transmission rate grade, the target base station is configured on the basis of the second communication transmission rate grade, so as to allocate a bandwidth resource matching the second communication transmission rate grade to the user terminal in the future time period. This solution can be used to adjust bandwidth resources in the future time period based on actual the communication transmission rate in the historical time period, and promptly meet the actual communication service requirements of the user terminal without relying on a GFBR notification from the core network. This solution is particularly suitable for communication services with highly variable bandwidth resource requirements, by which bandwidth resources can be flexibly adjusted based on the actual changing communication transmission rate, requirements of communication service resources can be met, and waste of bandwidth resources can be avoided. Furthermore, in this solution the preset grading rule is used to determine communication transmission rate grades, and bandwidth resources are adjusted based on grading rule, which can avoid frequent adjustment of bandwidth resources in case of narrow fluctuations of service requirements. This not only guarantees the bandwidth for communication services, but also reduces the frequency of bandwidth adjustment, thereby improving the overall stability the system.

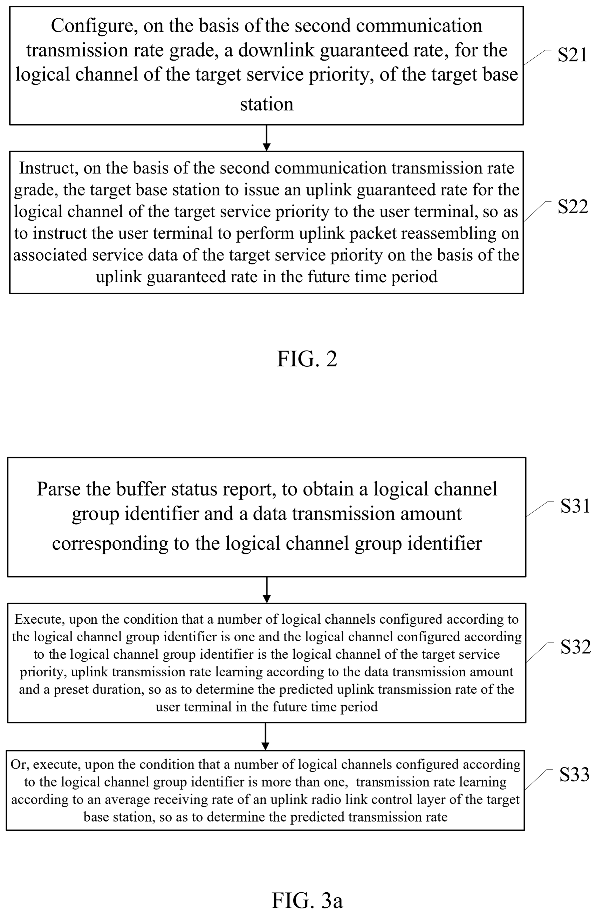

As shown in FIG. 2, the above-mentioned step S14, the target base station is configured on the basis of the second communication transmission rate grade, so as to allocate a bandwidth resource matching the second communication transmission rate grade to the user terminal in the future time period, includes the following.

At S21: the downlink guaranteed rate of the target base station for the logical channel of the target service priority is configured on the basis of the second communication transmission rate grade.

In some cases, the second communication transmission rate grade may represent an uplink guaranteed rate and a downlink guaranteed rate. In this solution, the uplink and downlink guaranteed rates are configured in different manners.

With respect to the downlink guaranteed rate, corresponding configuration is performed on a target base station, thereby ensuring that the base station issues downlink data to a user terminal at the downlink guaranteed rate. In some cases, the target base station is controlled to configure the guaranteed downlink rate for the logical channel of the target service priority, that is, to configure the PBR of the logical channel.

At S22: on the basis of the second communication transmission rate grade, the target base station is instructed to issue an uplink guaranteed rate for the logical channel of the target service priority to the user terminal, so as to instruct the user terminal to perform uplink packet reassembling on associated service data of the target service priority on the basis of the uplink guaranteed rate in the future time period.

For the uplink guaranteed rate, the target base station configures the user terminal, so as to ensure that the user terminal performs packet reassembling according to the uplink guaranteed rate and sends reassembled data to the base station. In some cases, the target base station is controlled to send the uplink guaranteed rate to the user terminal, so as to inform the user terminal. Further, the user terminal is instructed to perform packet reassembling according to the guaranteed uplink rate in the future time period.

By the solution provided by embodiments of the present application, both uplink and downlink guaranteed rates are configured, which enables comprehensive and effective configuration of communication resource and guarantees uplink and downlink communication requirements for target services. In actual applications, for services in which the bandwidth is variable and the required bandwidth cannot be accurately determined, the guaranteed bandwidth can be configured automatically based on preset grades by this solution. Without relying on the core network to notify the guaranteed bandwidth, the base station can automatically and adaptively guarantee the uplink and downlink bandwidth of services, thereby improving the user experience of the target service.

In 5G application scenarios, this solution can make full use of a process of configuring an uplink logical channel of a terminal with a priority rate in the 5G standard interface, the average rate of an uplink service of the logical channel is learned at a base station side, and the UE is notified to update the guaranteed rate of the logical channel when the rate change exceeds the preset rate grade.

The base station may be configured in in a way similar to that of the uplink. In actual applications, the uplink rate grade may follow the PBR grade in 3GPP 38.331, so as to inform the UE. The downlink service grade may be defined by the base station side.

Based on the solution provided by the above-mentioned embodiments, optionally, the communication transmission rate includes a buffer status report reported by the user terminal.

The buffer status report (BSR) is reported by the user terminal to the base station to indicate the amount of data waiting to be sent at the user terminal side, thereby requesting the base station to allocate required communication resources to the user terminal.

As shown in FIG. 3a, the above-mentioned step S12, transmission rate learning is executed according to the communication transmission rate information so as to determine a predicted transmission rate of the user terminal in a future time period, includes the following.

At S31: the buffer status report is parsed, to obtain a logical channel group identifier and a data transmission amount corresponding to the logical channel group identifier.

The BSR reported by the user terminal may be reported according to the logical channel group, In some cases, the BSR includes an identifier of the logical channel group and the data transmission amount to be sent by the logical channel group.

At S32: upon the condition that the number of logical channels configured according to the logical channel group identifier is one and the logical channel configured according to the logical channel group identifier is the logical channel of the target service priority, uplink transmission rate learning is executed according to the data transmission amount and a preset duration, so as to determine the predicted uplink transmission rate of the user terminal in the future time period.

The logical channel group may be provided with one or more logical channels, if there is only one logical channel in the logical channel group, and this logical channel is the logical channel of the target service priority, then the data transmission amount corresponding to the logical channel group identifier is the amount of data to be sent of the target service. Based on this, the data transmission amount is used to calculate the predicted transmission rate, for example, the data transmission amount may be divided by the preset duration to calculate the actual transmission rate during the historical time period, and the actual transmission rate is used to determine the predicted uplink transmission rate in the future time period.

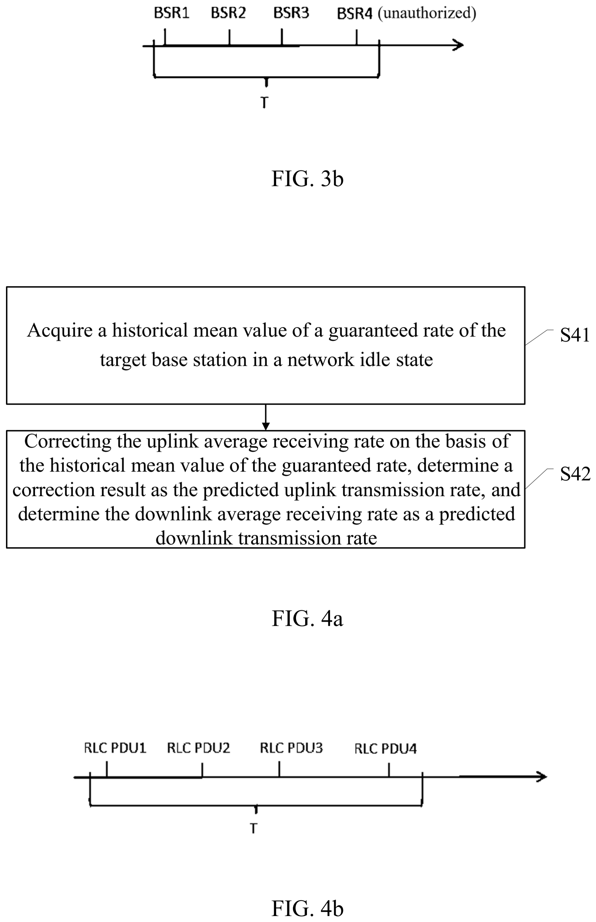

By way of example, FIG. 3b is a schematic diagram of acquiring a plurality of BSRs of a method for adjusting a communication bandwidth provided by embodiments of the present application. In this embodiment, periodic adjustment is performed based on a preset adjustment period, a first adjustment period before the current moment is used as a historical time period, a second adjustment period after the current moment is used as a future time period, and the first adjustment period and the second adjustment period are adjacent adjustment periods respectively. The time length of the preset adjustment period is T, that is, the preset duration is T, and the unit of T may be seconds. Authorized BSRs and unauthorized BSRs may be received within the first adjustment period. In this embodiment, the sum of the data amounts of the authorized BSRs and the unauthorized BSRs is divided by T to obtain a predicted transmission rate of the second adjustment period, and the predicted transmission rate is the actual RLC layer rate of the UE on the logical channel of the sending end within the first adjustment period.

In FIG. 3b, BSR1, BSR2, and BSR3 are three authorized BSRs within the period T, and the numbers of bytes corresponding to the BSR1, BSR2, and BSR3 are n1, n2, and n3 respectively. BSR4 is an unauthorized BSR, and the number of bytes of BSR4 is n4.

Based on this, the transmission rate of the first adjustment period is calculated as follows: an average rate of the XR service on 5QI = 8 * (n1 + n2 + n3 + n4) / T / 1000, the unit is Kbps. 8 and 1000 are used for unit conversion, that is, B is converted to Kbps. This solution can be used to accurately calculate the uplink RLC layer rate of 5QI at the sending end of UE, and the calculated rate may be directly used as the predicted transmission rate.

At S33: upon the condition that the number of logical channels configured according to the logical channel group identifier is more than one, transmission rate learning is executed according to the average receiving rate of an uplink radio link control layer of the target base station, so as to determine the predicted transmission rate.

If the logical channel group is provided with plurality of logical channels, the data transmission amount carried by the BSR is the sum of the amount of data that needs to be sent by the plurality of logical channels. In this case, it is not possible to accurately know the amount of data that needs to be sent by each of the plurality of logical channels in the logical channel group. Based on this, the data transmission amount carried in the BSR is not used in this step, instead, transmission rate learning is executed according to the average receiving rate of an uplink radio link control layer (i.e., RLC layer) of the target base station side, so as to determine the predicted transmission rate in the future time period. In some cases, the total amount of uplink data of the logical channel of the 5QI of the target service at the target base station side may be counted in the historical time period, and then according to the method of calculating an average value in the above-mentioned embodiments, the quotient of the total amount of uplink data and a preset time length may be determined as the predicted uplink transmission rate in the future time period.

With the solution provided in embodiments of the present application, for the target service that needs to be guaranteed, the actual amount of uplink transmission data of the user terminal in the historical time period is statistically determined, so that the accuracy of the predicted transmission rate determined for the future time period can be improved, the requirement for uplink communication resources by the target service of the user terminal can be reflected more accurately, and suitable bandwidth resources can be allocated to the user terminal.

In actual applications, when network resources are not limited, the average uplink receiving rate at the target base station side can accurately reflect the actual uplink transmission rate of the service at the user terminal side, thereby accurately predicting the uplink transmission rate in a future time period.

However, in some application scenarios, network resources are limited due to network congestion, the following method may be used to correct the rate.

Based on the solution provided in the above embodiments, optionally, the communication transmission rate information includes both an uplink average receiving rate and a downlink average receiving rate at a radio link control layer of a logical channel of the target service priority of the target base station.

In this embodiment, the communication transmission rate information includes uplink and downlink average receiving rates. In this solution, the transmission rates in the two directions in the future time period are predicted separately, which facilitates more reasonable allocation of bandwidth resources.

As shown in FIG. 4a, the above-mentioned step S33, transmission rate learning is executed according to an average receiving rate of an uplink radio link control layer of the target base station, so as to determine the predicted transmission rate includes the following.

At S41: a historical mean value of a guaranteed rate of the target base station in a network idle state is acquired.

Upon the condition that the number of logical channels configured according to the logical channel group identifier is more than one, transmission rate learning in the future time period is executed according to the average receiving rate of the RLC layer of the target base station side in this embodiment. To make the predicted transmission rate determined by learning closer to requirements of the target service, in this step, the historical mean value of the guaranteed rate of the target base station in the network idle state is acquired, and is used to correct difference between the transmission rate of the base station and that of and the user terminal, thereby enabling the predicted transmission rate closer to actual requirements of target service of the user terminal. The historical mean value of the guaranteed rate acquired in this step serves as an offset for performing correction in subsequent steps.

At S42: the uplink average receiving rate is corrected on the basis of the historical mean of the guaranteed rate, a correction result is determined as the predicted uplink transmission rate, and the downlink average receiving rate is determined as a predicted downlink transmission rate.

In this step, the rate of the RLC layer at the receiving end of the 5QI logic channel of the base station is used, and the historical mean value of guaranteed rate acquired in the above step is applied for correction, so as to obtain the rate approximate to the RLC layer rate of the sending end of the user terminal side.

In some cases, according to the network congestion situation, it can be divided into two situations: limited network resources and unlimited network resources. In the case of limited network resources, the average uplink receiving rate may be lower than the actual service rate, in this case, the historical mean value of guaranteed rate is used to perform correction, thereby obtaining a rate closer to the actual uplink transmission rate of the user terminal side.

For example, the uplink average receiving rate may be corrected based on the above historical mean value of the guaranteed rate and the network congestion situation. For example, the following two methods may be used.

Method 1: an offset X is determined based on network congestion, the offset X does not exceed the historical mean value of the guaranteed rate. Then, the sum of the uplink average receiving rate and the offset X is determined as the correction result.

Method 2: firstly, half of the difference between the historical mean of the guaranteed rate and the uplink average receiving rate is determined as the offset X, and then the sum of the offset X and the uplink average receiving rate is determined as the correction result.

For the downlink average receiving rate, the RLC layer rate of the target base station may be counted, and an average value may be calculated. By way of example, FIG. 4b is a schematic diagram of acquiring a plurality of RLC PDUs of a method for adjusting a communication bandwidth provided by embodiments of the present application, in this embodiment, periodic bandwidth adjustment is performed based on a preset adjustment period, wherein the time length of the adjustment period is T, assuming that there are 4 downlink RLC layer PDUs in the first adjustment period, that is, RLC PDU1, RLC PDU2, RLC PDU3, and RLC PDU4, with sizes n1, n2, n3, and n4 respectively, and an average of the downlink RLC layer rate is calculated in this step.

An average of RLC layer rate = 8*(n1+n2+n3+n4)/T/1000, in Kbps.

With the solution provided in embodiments of the present application, communication resources close to actual communication requirements of the target service can be determined for both uplink and downlink directions, which facilitates more reasonable allocation of communication resources to the target service and ensures the experience of target service on the user terminal.

Based on the solution provided in the above embodiment, optionally, the preset grading rule includes a plurality of preset transmission rate intervals, the preset grading rule includes a preset uplink analysis rule and a preset downlink analysis rule, and the span of a preset uplink transmission rate interval of the preset uplink analysis rule is shorter than the span of a preset downlink transmission rate interval of the preset downlink analysis rule.

Since the amount of data differs significantly in uplink and downlink directions in actual applications, in this solution, analysis rules are preset for uplink and downlink respectively, which facilitates adjusting bandwidth resources in the uplink and downlink directions respectively.

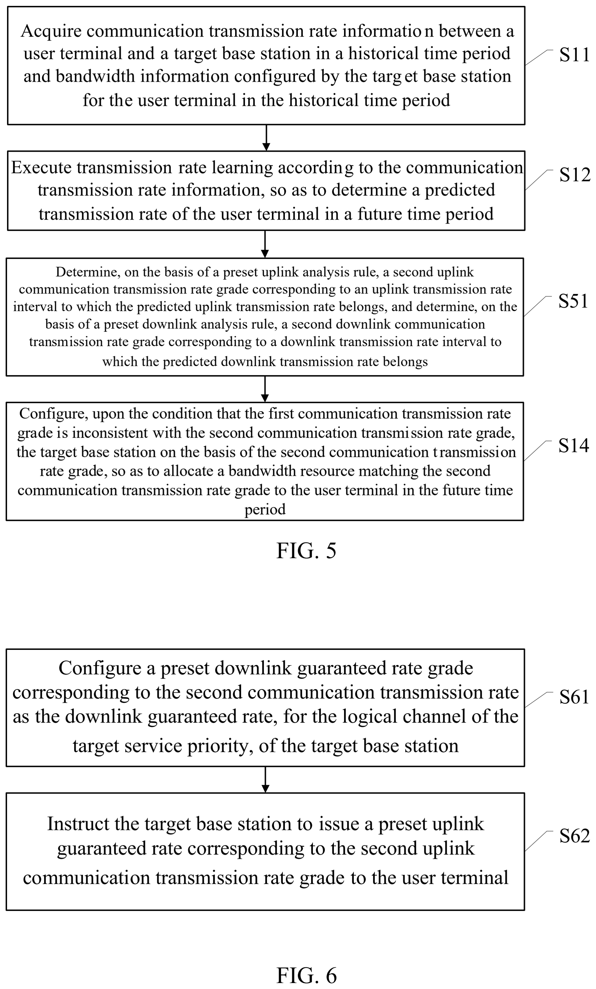

As shown in FIG. 5, the above-mentioned step S13, a first communication transmission rate grade corresponding to the bandwidth information and a second communication transmission rate grade corresponding to the predicted transmission rate are determined on the basis of a preset grading rule, includes the following.

At S51: a second uplink communication transmission rate grade corresponding to an uplink transmission rate interval to which the predicted uplink transmission rate belongs is determined on the basis of a preset uplink analysis rule, and a second downlink communication transmission rate grade corresponding to a downlink transmission rate interval to which the predicted downlink transmission rate belongs is determined on the basis of a preset downlink analysis rule.

In embodiments of the present application, communication transmission rate grades are determined for both the uplink and downlink directions. In some cases, in preset grading rules, rate intervals may be set for both uplink and downlink directions. In this step, the predicted uplink and downlink transmission rates match corresponding rate intervals respectively, so as to determine the second uplink communication transmission rate grade and the second downlink communication transmission rate grade.

For example, without loss of generality, taking uplink as an example, division is performed according to an upper limit of an interval rate value, and the rate grades are set in advance as {kBps8, kBps16, kBps32, kBps64, kBps128, kBps256, kBps512, kBps1024, kBps2048, kBps4096, kBps8192, kBps16384, kBps32768, kBps65536}. Kbps refers to the number of kilobytes (bytes) transmitted per second, when setting PBR in this solution, Kbps may also be converted into Kbps, the conversion formula is 1 Kbps = 8 Kbps, that is, the number of kilobytes (bytes) transmitted per second is converted into the number of kilobits (bits) transmitted per second. Optionally, intervals may be divided in advance based on the Kbps unit, which allows flexible configuration based on actual requirements.

Assuming that the configured PBR during a historical time period is 32 Kbps, and the predicted uplink transmission rate is 56 Kbps. Since 56 Kbps is between 32 Kbps and 64 Kbps, according to the principle of taking the upper limit value of the interval, the second uplink communication transmission rate grade is determined as 64Kbps. Subsequently, the user terminal may be configured with64Kbps by the target base station, so as to update the uplink PBR of the user terminal.

It should be noted that in this embodiment, when configuring the target base station based on the second communication transmission rate grade, the upper limit value of the interval of the second communication transmission rate grade may be directly used to configure the target base station. For example, 64 Kbps may be directly used to perform adjustment of uplink bandwidth. In actual applications, a lower limit, average value, or other statistical values of a preset interval may also be used for configuration. The value-setting rule is usually set together when intervals are preset, so as to ensure that the value-setting methods corresponding to the intervals are consistent.

For another example, assuming the predicted uplink transmission rate is 30 Kbps, which is between 32 Kbps and 64 Kbps, according to the principle of taking an upper limit value of the interval, the second uplink communication transmission rate grade is determined as 32Kbps, which is the same as the currently configured PBR value of 32 Kbps, and thus, no bandwidth adjustment is required.

The method and steps for downlink rate grade evaluation are the same as those for uplink rate grade evaluation, the downlink rate interval may be set according to an actual rate value, which is usually larger than the rate interval set for uplink, so as to match scenarios with larger downlink traffic of most XR services.

With the solution provided in embodiments of the present application, the second uplink communication transmission rate grade and the second downlink communication transmission rate grade are determined according to analysis rules of the two communication directions, uplink and downlink, respectively, so that the uplink and downlink are configured separately, which may be closer to actual service application requirements and meet the bandwidth requirements of different values in the uplink and downlink directions.

Based on the solution provided in the above embodiment, optionally, as shown in FIG. 6, the above step S21, the downlink guaranteed rate of the target base station for the logical channel of the target service priority is configured on the basis of the second communication transmission rate, includes the following.

At S61: a preset downlink guaranteed rate corresponding to the second communication transmission rate grade is configured as the downlink guaranteed rate, for the logical channel of the target service priority, of the target base station.

In this embodiment, the communication transmission rate grade and corresponding preset guaranteed rate thereof may be set in the above-mentioned preset grading rule. For example, the upper limit value of corresponding interval of the communication transmission rate grade is used as the preset guaranteed rate.

The above step S22, the target base station is instructed, on the basis of the second communication transmission rate grade, to issue an uplink guaranteed rate of a logical channel of the target service priority to the user terminal, includes the following.

At S62: the target base station is instructed to issue a preset uplink guaranteed rate corresponding to the second uplink communication transmission rate grade to the user terminal.

In embodiments of the present application, the uplink guaranteed rate is configured by issuing the uplink guaranteed rate from a target base station to a user terminal, the user terminal is instructed to subsequently perform packet reassembling according to the received preset uplink guaranteed rate, so as to perform data uplink transmission according to the uplink guaranteed rate, thereby guaranteeing the uplink communication bandwidth requirements of the target service.

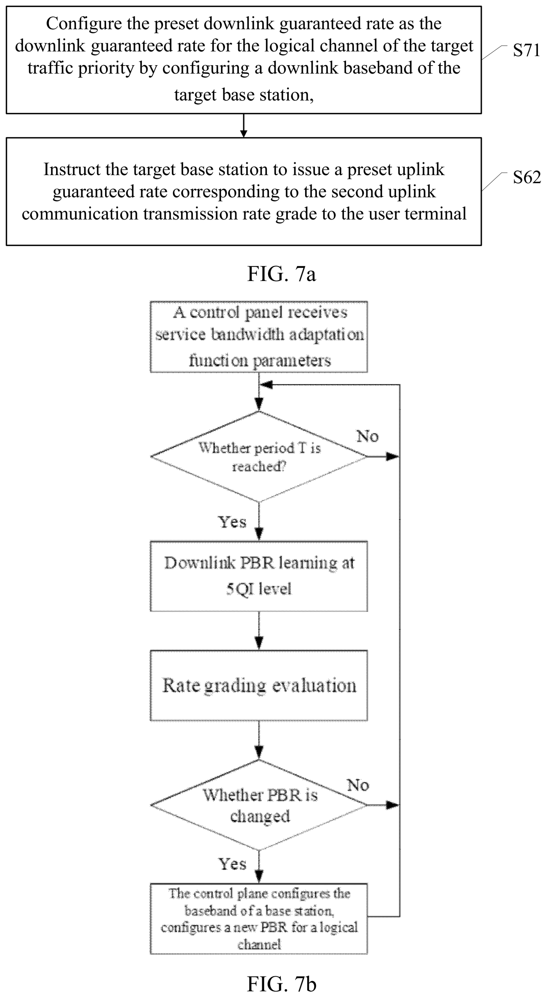

Based on the solution provided in the above embodiment, optionally, as shown in FIG. 7a, the above step S61, a preset downlink guaranteed rate corresponding to the second communication transmission rate grade is configured as the downlink guaranteed rate for the logical channel of the target service priority of the target base station, includes the following.

At S71: the preset downlink guaranteed rate is configured as the downlink guaranteed rate for the logical channel of the target service priority by configuring a downlink baseband of the target base station.

The downlink guaranteed rate is configured by configuring the downlink baseband of the target base station in embodiments of the present application, in some cases, the configuration may be implemented by an internal configuration message of the base station. The downlink baseband is responsible for processing downlink scheduling requests and allocating resources based on the configured preset downlink guaranteed rate, thereby executing downlink data transmission according to the downlink guaranteed rate, so as to ensure the downlink communication bandwidth requirements of the target service.

Referring to FIG. 7b, for downlink communication bandwidth adjustment, in the solution provided in embodiments of the present application, firstly, bandwidth adaptation function parameters are received by a control panel of a target base station, so as to implement pre-configuration of the function parameters. Then, based on the adjustment period of the preset duration, periodic transmission rate learning is executed on the downlink communication direction to determine the predicted transmission rate, so as to execute downlink PBR learning at the 5QI level of the target service. After the downlink predicted transmission rate is determined, rate grading evaluation is performed according to the preset downlink grading rules to determine whether the downlink grade has changed, thereby determining whether the PBR needs to be changed. If a change is required, the baseband of the target base station is configured by the control plane of the target base station, thereby configuring a new PBR for the logical channel of the user terminal, so as to implement adjustment of downlink communication bandwidth and guarantee downlink communication resources of the target service.

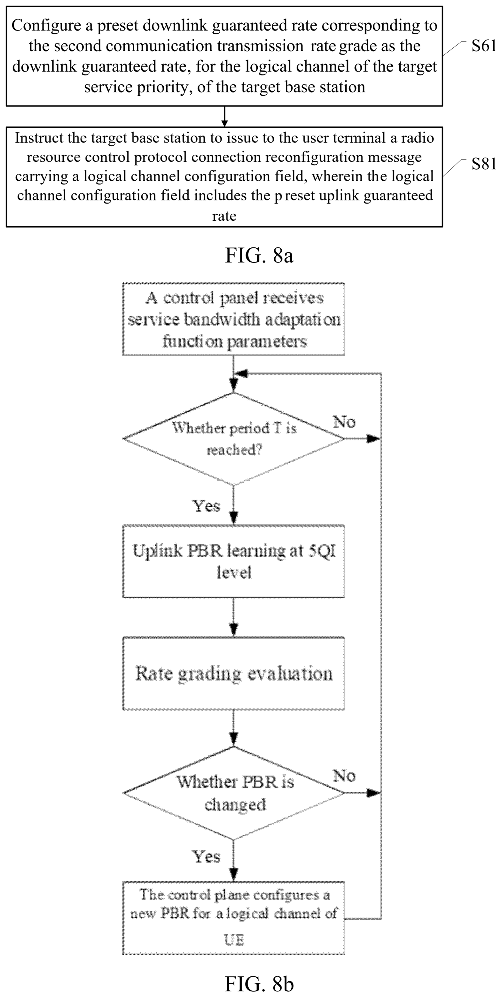

Based on the solution provided in the above embodiment, optionally, as shown in FIG. 8, the above step S62, the target base station is instructed to issue a preset uplink guaranteed rate corresponding to the second uplink communication transmission rate grade to the user terminal, includes the following.

At S81: the target base station is instructed to issue to the user terminal a radio resource control protocol connection reconfiguration message carrying a logical channel configuration field, wherein the logical channel configuration field includes the preset uplink guaranteed rate.

In this embodiment, in the process of configuring the user terminal by the target base station, the user terminal is configured by means of the Radio Resource Control protocol (RRC) reconfiguration message.

For example, based on {prioritisedBitRate ENUMERATED {kBps0, kBps8, kBps16, kBps32, kBps64, kBps128, kBps256, kBps512, kBps1024, kBps2048, kBps4096, kBps8192, kBps16384, kBps32768, kBps65536} in LogicalChannelConfig in 3GPP TS38.331, the prioritisedBitRate may be configured as a preset uplink guaranteed rate, and then is sent to the UE for notification.

Referring to FIG. 8b, for uplink communication bandwidth adjustment, in the solution provided in embodiments of the present application, firstly, bandwidth adaptation function parameters are received by a control panel of the target base station, so as to implement pre-configuration of the function parameters. Then, based on the adjustment period of the preset duration, periodic transmission rate learning is executed on the uplink communication direction to determine the predicted transmission rate, so as to execute uplink PBR learning at the 5QI level of the target service. After determining the uplink predicted transmission rate, a rate grading evaluation is performed according to the preset uplink grading rules to determine whether the uplink grading has changed, thereby determining whether the PBR needs to be changed. If a change is required, a new PBR of the logical channel of the user terminal UE is configured by a control plane of the target base station, thereby instructing the user terminal to perform data packetization with the new PBR, so as to implement adjustment of uplink communication bandwidth and guarantee uplink communication resources of the target service.

With the solution provided by embodiments of the present application, the guarantee of communication bandwidth resource is realized for 5G, 5G-A, and 6G services in which the guaranteed bandwidth cannot be accurately determined or the bandwidth changes frequently, and the guaranteed bandwidth required by the service may be automatically guaranteed without relying on guaranteed rate notification of the core network, so as to ensure the user experience. This application is applicable not only to 5QI of GBR, but also to 5QI of NGBR.

Based on the solution provided by the above embodiment, optionally, this solution executes periodic transmission rate learning based on an adjustment period of a certain duration. In some cases, an adjustment period of a certain time period may be pre-set, so as to implement periodic adjustment of the communication bandwidth.

In this embodiment, the historical time period includes a first adjustment period, and the future time period includes a second adjustment period; wherein the adjustment period is a time period with a preset duration for periodically adjusting a communication bandwidth, and the second adjustment period is an adjustment period adjacent to the first adjustment period and after the first adjustment period.

With the solution provided in embodiments of the present application, periodic adjustment of bandwidth may be implemented in actual applications, and transmission rate learning may be executed at an adjustment period of a preset duration, so as to periodically learn the predicted transmission rate of the next adjustment period, and automatically execute learning and adjustment of bandwidth resources.

Next, there is provided a device for adjusting a communication bandwidth, the device may be used to implement the method for adjusting a communication bandwidth described in any of the above embodiments. The device may be disposed inside the target base station or outside the target base station and is in communication with the target base station.

The device for adjusting a communication bandwidth provided in embodiments of the present application may include functional units cooperated with one another, including a service rate learning unit, a rate grading evaluation unit, a control plane unit, and a scheduling unit. The device is used to learn and detect uplink and downlink rates of the service in real time, when the rate grading threshold is exceeded, the terminal or base station is notified prompted, so that the UE and the base station can bring a new guaranteed rate into effect in time, thereby achieving the effect of self-adaptive guarantee of uplink and downlink service rate bandwidths. In this solution, adjustment is performed based on preset grading rules, thereby avoiding the problem of frequent PBR notification due to the fact that a UE or a base station is configured when the rate of the UE fluctuates slightly. The rate grading rules for uplink and downlink directions may be set separately to solve the problem of significant differences between the uplink and downlink service rates of 5G-A. In addition, in this solution, the uplink rate grade refers to the PBR enumeration rate in standard 38.331, which may be used to adapt to the guaranteed rate transmission of the air interface. The downlink rate grade may be defined according to development of 5G-A services, and the range is usually wider than that of the uplink.

For the predicted uplink transmission rate, in this solution, the average transmission rate of uplink service is reasonably evaluated based on the BSR reported by the user terminal received in the adjustment period and the amount of data counted in the report. For the downlink predicted transmission rate, in this solution, the average downlink RLC layer rate of a certain 5QI is self-learnt, and this rate is used as the guaranteed PBR rate, so as to make the downlink service bandwidth guarantee independent of core network notifications.

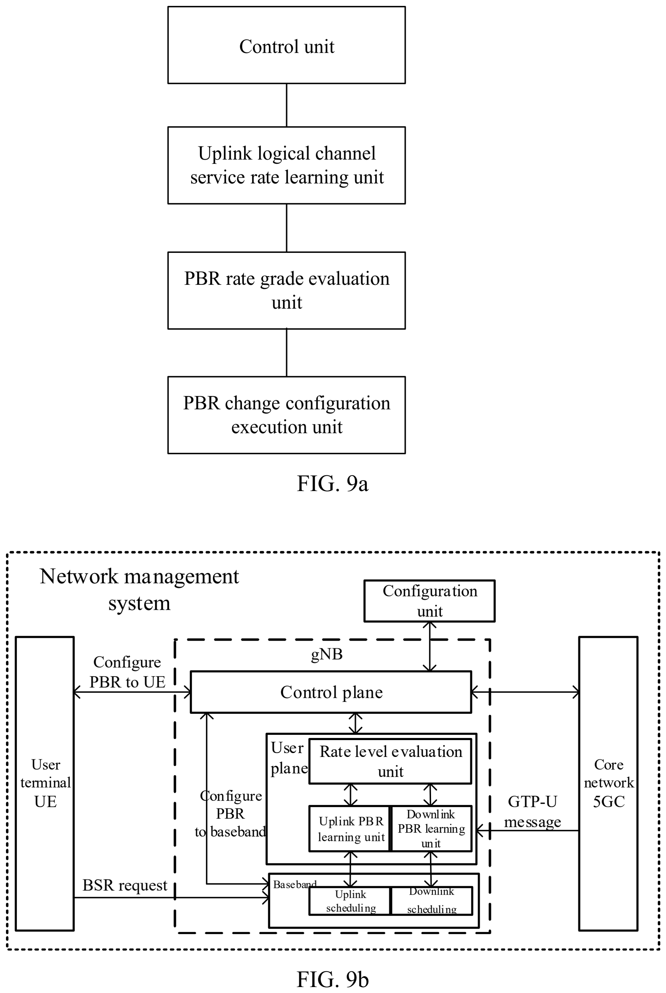

As shown in FIG. 9a, the device provided in embodiments of the present application may include the following functional units.

A control plane (i.e., control unit) used for signaling processing receives the PBR results from the rate grade evaluation unit and configures the received PBR to the UE or base station.

A PBR rate grade evaluation unit is used to match the predicted PBR grade with the current PBR grad, if the grade changes, the control plane is notified of configuring the UE or base station according to requirements of actual change to bring the new PBR into effect.

An uplink and downlink logical channel service rate learning unit includes an uplink PBR learning unit and a downlink PBR learning unit. The uplink PBR learning unit is used to execute uplink PBR learning based on the 5QI and pass the learning results to the rate grade evaluation unit. The downlink PBR learning unit is used to execute downlink PBR learning based on the 5QI and pass the learning results to the rate grade evaluation unit.

A PBR change configuration execution unit includes an uplink scheduling unit and a downlink scheduling unit. The uplink scheduling unit is the baseband functional unit responsible for processing uplink scheduling. It is used for uplink scheduling request processing, receiving the BSR reported by the UE, and allocating RB resources to logical channel groups of UE based on the BSR. The downlink scheduling unit is the baseband functional unit responsible for processing downlink scheduling. It is used for downlink scheduling requests processing, and allocating resources based on the 5QI downlink PBR, so as to guarantee the PBR rate within the statistical window.

FIG. 9b is a schematic diagram of a system structure including the above-mentioned device. In order to preset parameters flexibly, the system may be provided with a configuration unit that is located in the network management system for parameter configuration of PBR learning, parameters of PBR learning include the uplink rate grade, the downlink rate grade, a list of 5QIs requiring PBR adaptive guarantee, uplink and downlink enable switches, and the learning period.

In embodiments of the present application, the user terminal UE in communication with the target base station may be a general 5G or 5G-A terminal, which can send a scheduling request to the base station based on the traffic amount in the logical channel. After scheduling authorization is received, according to the service priority of the logical channels, the data packets are reassembled preferentially based on the PBR rate.

In addition, PBR is the minimum guaranteed rate, if there are still remaining RB resources after the communication resource allocation reaches PBR, RB resources can be further allocated to logical channels.

The 5GC in communication with the target base station may specifically refer to a general 5G or 5G-A core network. In this solution, GC is used to cooperate with the base station and UE to complete UE access and implement data transmission and forwarding.

In addition, the solution provided in embodiments of the present application is described by taking an RLC layer as an example, and the solution may also be implemented by using a PDCP layer rate in a case that the requirement for rate accuracy is not high. Alternatively, the sum of a PDCP layer rate and an average RLC layer header overhead may be used to obtain a rate close to an actual RLC layer rate and used as PBR, which may also achieve similar guarantee effect.

Similarly, for downlink RLC layer average rate learning, if the requirement for rate accuracy is not high, the downlink PBR in this solution may be replaced by PDCP, GTP-U layer rates; alternatively, the overhead of each layer may be estimated using these layer rates, so as to obtain a rate close to a RLC layer rate as PBR, which may also achieve similar guarantee effect.

With the solution provided by embodiments of the present application, the service bandwidth can be guaranteed by self-learning of the base station without relying on the GFBR notification of the core network. The problem that an operator cannot deploy XR AF and cannot actively initiate QoS guarantee is solved, and the operator can be facilitated to quickly deploy XR services. In addition, the problems that due to there are many XR service types and the bandwidth varies greatly, the bandwidth cannot be accurately set or the bandwidth setting is significantly different from actual bandwidth, and the bandwidth of the XR service cannot be guaranteed when the operator deploys XR services by a static parameter template can be solved, which can effectively guarantee the user experience. This solution can achieve timely deployment of XRAF, avoid the problem of frequent adjustment when the service bandwidth changes slightly, effectively alleviate the negative impact of adjusting the bandwidth on the time delay, and limit the signaling overhead between a base station and a core network.

This solution is suitable for 5G, 5G-A, and 6G services and base stations with bandwidth and time delay requirements, such as XR services, including AR, VR, MR, real-time cloud gaming, and bandwidth-adaptive video surveillance. In addition, it may also be applied to virtual space-based services such as virtual 3D conferencing, VR live streaming, VR shopping, VR education, AR engineering manufacturing, and simulation training exercises, this solution is widely applicable to various communication-based business scenarios.

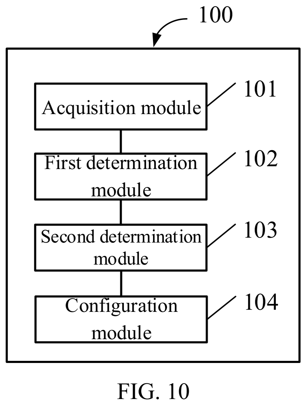

In order to solve the problems existing in the related art, the embodiments of the present application further provide a device 100 for adjusting a communication bandwidth, as shown in FIG. 10, the device includes: an acquisition module 101 for acquiring communication transmission rate information between a user terminal and a target base station in a historical time period and bandwidth information configured by the target base station for the user terminal in the historical time period; a first determination module 102 for executing transmission rate learning according to the communication transmission rate information so as to determine a predicted transmission rate of the user terminal in a future time period; a second determination module 103 for determining, on the basis of a preset grading rule, a first communication transmission rate grade corresponding to the bandwidth information and a second communication transmission rate grade corresponding to the predicted transmission rate; and a configuration module 104, upon the condition that the first communication transmission rate grade is inconsistent with the second communication transmission rate grade, configuring the target base station on the basis of the second communication transmission rate grade, so as to allocate a bandwidth resource matching the second communication transmission rate grade to the user terminal in the future time period.

By the device provided in the embodiment of the present application, communication transmission rate information between a user terminal and a target base station in a historical time period and bandwidth information configured by the target base station for the user terminal in the historical time period are acquired. Then, transmission rate learning is executed according to the communication transmission rate information so as to determine a predicted transmission rate of the user terminal in a future time period. Subsequently, a first communication transmission rate grade corresponding to the bandwidth information and a second communication transmission rate grade corresponding to the predicted transmission rate are determined on the basis of a preset grading rule. Upon the condition that the first communication transmission rate grade is inconsistent with the second communication transmission rate grade, the target base station is configured on the basis of the second communication transmission rate grade, so as to allocate a bandwidth resource matching the second communication transmission rate grade to the user terminal in the future time period. This solution can be used to adjust bandwidth resources in the future time period based on actual the communication transmission rate in the historical time period, and promptly meet the actual communication service requirements of the user terminal without relying on a GFBR notification from the core network. This solution is particularly suitable for communication services with highly variable bandwidth resource requirements, by which bandwidth resources can be flexibly adjusted based on actual changing communication transmission rate, requirements of communication service resources can be met, and waste of bandwidth resources can be avoided. Furthermore, in this solution, the preset grading rule is used to determine communication transmission rate grades, and bandwidth resources are adjusted based on grading rule, which can avoid frequent adjustment of bandwidth resources in case of narrow fluctuations in service requirements. This not only guarantees bandwidth for communication services, but also reduces the frequency of bandwidth adjustment, thereby improving the overall stability the system.

The above modules in the device provided in embodiments of the present application may also implement the method steps provided in the above method embodiments. Alternatively, the device provided in embodiments of the present application may further include other modules besides the above modules for implementing the method steps provided in the above method embodiments. Furthermore, the device provided in embodiments of the present application can implement technical effects that can be achieved by the above method embodiments.

An embodiment of the present application further provides an electronic device, including a processor, a memory, and a computer program stored on the memory and is executable on the processor, and the computer program, when executed by the processor, implements the various processes implemented by embodiments of a method for adjusting a communication bandwidth, and can achieve the same technical effect, to avoid repetition, it will not be repeated here.

An embodiment of the present application further provides a computer-readable storage medium storing a computer program thereon, and the computer program, when executed by the processor, implements the various processes of embodiments of the method for adjusting a communication bandwidth described above, and can achieve the same technical effect, to avoid repetition, it will not be repeated here. The computer-readable storage medium includes such as read-only memory (ROM), random access memory (RAM), magnetic disk or optical disk.

It should be understood by those skilled in the art that the embodiments of the present application may be provided as a method, system or computer program product. Therefore, the present application may take the form of a complete hardware embodiment, a complete software embodiment or an embodiment combining both software and hardware. Moreover, the present application may take the form of a computer program product implemented on one or more computer-usable storage media (including but not limited to disk storage, CD-ROM, optical storage, etc.) containing computer-usable program code.

The present application is described with reference to the flowcharts and/or block diagrams of the method, device (systems), and computer program product according to embodiments of the present application. It should be understood that each process and/or block in the flowcharts and/or block diagrams, as well as the combination of processes and/or blocks in the flowcharts and/or block diagrams, may be implemented by computer program instructions. These computer program instructions may be provided to a processor of a general computer, a special-purpose computer, an embedded processor, or other programmable data processing device to produce a machine, so that the instructions executed by the processor of the computer or other programmable data processing device generate a device for implementing functions specified in one or more processes in the flowchart and/or one or more blocks in the block diagrams.

These computer program instructions may also be stored in a computer-readable memory that can direct a computer or other programmable data processing device to operate in a specific manner, so that the instructions stored in the computer-readable memory produce a product including an instruction device that implements the functions specified in one or more processes in the flowcharts and/or one or more blocks in the block diagrams.

These computer program instructions may also be loaded onto a computer or other programmable data processing device, so that a series of operating steps are executed on the computer or other programmable device to produce computer-implemented processing, such that the instructions executed on the computer or other programmable device provide steps for implementing the functions specified in one or more processes in the flowcharts and/or one or more blocks in the block diagrams.

In a typical configuration, a computing device includes one or more processors (Central Processing Unit, CPU), an input/output interface, a network interface, and a memory.

The memory may include non-permanent storage in a computer-readable medium in the form of random access memory (RAM) and/or non-volatile memory, such as read-only memory (ROM) or flash RAM. The memory is an example of computer-readable medium.

Computer readable media include permanent and non-permanent, removable and non-removable media that may be used to store information by any method or technology. Information may be computer-readable instructions, data structures, program modules or other data. Examples of computer storage media include, but are not limited to, Phase Change Memory (PCM), Static Random-Access Memory (SRAM), Dynamic Random Access Memory (DRAM), other types of random access memory (RAM), Read-Only Memory (ROM), Electrically Erasable Programmable Read Only Memory (EEPROM), Flash memory or other memory technology, Compact Disc Read-Only Memory (CD-ROM), Digital Video Disc (DVD) or other optical storage, magnetic cassettes, magnetic tape magnetic disk storage or other magnetic storage devices or any other non-transmission media that may be used to store information that is accessible to a computing device. According to the definition in this document, computer-readable media do not include temporary computer-readable media (transitory media), such as modulated data signals and carrier waves.

It should be noted that, the terms "include", "comprise" or any other variations thereof are intended to cover a non-exclusive inclusion, such that a process, method, article, or device that comprises a series of elements not only comprises those elements, but also comprises other elements that are not explicitly listed, or further comprises elements that are inherent to the process, method, article, or device. Without further limitations, an element limited by "comprising a..." does not exclude the presence of other identical elements in the process, method, article, or device that includes the element.

It should be understood by those skilled in the art that the embodiments of the present application may be provided as a method, system or computer program product. Therefore, the present application may take the form of a complete hardware embodiment, a complete software embodiment or an embodiment combining both software and hardware. Moreover, the present application may take the form of a computer program product implemented on one or more computer-usable storage media (including but not limited to disk storage, CD-ROM, optical storage, etc.) containing computer-usable program code.

The above are merely embodiments of the present application and are not intended to limit the present application. Those skilled in the art will appreciate that, various modification and alteration can be made to the present application. Any modification, equivalent replacement, improvement, etc., that is made within the spirit and principle of the present application should be included within the scope of the claims of the present application.

## Claims

1. A method for adjusting a communication bandwidth, comprising:
acquiring communication transmission rate information between a user terminal and a target base station in a historical time period and bandwidth information configured by the target base station for the user terminal in the historical time period;
executing transmission rate learning according to the communication transmission rate information, so as to determine a predicted transmission rate of the user terminal in a future time period;
determining, on the basis of a preset grading rule, a first communication transmission rate grade corresponding to the bandwidth information and a second communication transmission rate grade corresponding to the predicted transmission rate; and
configuring, upon the condition that the first communication transmission rate grade is inconsistent with the second communication transmission rate grade, the target base station on the basis of the second communication transmission rate grade, so as to allocate a bandwidth resource matching the second communication transmission rate grade to the user terminal in the future time period.

2. The method of claim 1, wherein the bandwidth information comprises a guaranteed rate of a logical channel of a target service priority;
wherein configuring the target base station on the basis of the second communication transmission rate grade, so as to allocate the bandwidth resource matching the second communication transmission rate grade to the user terminal in the future time period comprises:
configuring, on the basis of the second communication transmission rate grade, a downlink guaranteed rate, for the logical channel of the target service priority, of the target base station; and
instructing, on the basis of the second communication transmission rate grade, the target base station to issue an uplink guaranteed rate for the logical channel of the target service priority to the user terminal, so as to instruct the user terminal to perform uplink packet reassembling on associated service data of the target service priority on the basis of the uplink guaranteed rate in the future time period.

3. The method of claim 2, wherein the communication transmission rate information comprises a buffer status report reported by the user terminal;
wherein executing transmission rate learning according to the communication transmission rate information, so as to determine the predicted transmission rate of the user terminal in the future time period comprises:
parsing the buffer status report, to obtain a logical channel group identifier and a data transmission amount corresponding to the logical channel group identifier; and
executing, upon the condition that a number of logical channels configured according to the logical channel group identifier is one and the logical channel configured according to the logical channel group identifier is the logical channel of the target service priority, uplink transmission rate learning according to the data transmission amount and a preset duration, so as to determine a predicted uplink transmission rate of the user terminal in the future time period; or
executing, upon the condition that a number of logical channels configured according to the logical channel group identifier is more than one, transmission rate learning according to an average receiving rate of an uplink radio link control layer of the target base station, so as to determine the predicted transmission rate.

4. The method of claim 3, wherein the communication transmission rate information comprises both an uplink average receiving rate and a downlink average receiving rate at a radio link control layer of the logical channel of the target service priority of the target base station;
wherein executing transmission rate learning according to the average receiving rate of the uplink radio link control layer of the target base station, so as to determine the predicted transmission rate comprises:
acquiring a historical mean value of a guaranteed rate of the target base station in a network idle state; and
correcting the uplink average receiving rate on the basis of the historical mean value of the guaranteed rate, determining a correction result as the predicted uplink transmission rate, and determining the downlink average receiving rate as a predicted downlink transmission rate.

5. The method of claim 4, wherein the preset grading rule comprises a plurality of preset transmission rate intervals, the preset grading rule comprises a preset uplink analysis rule and a preset downlink analysis rule, and a span of a preset uplink transmission rate interval of the preset uplink analysis rule is shorter than a span of a preset downlink transmission rate interval of the preset downlink analysis rule;
wherein determining, on the basis of the preset grading rule, the first communication transmission rate grade corresponding to the bandwidth information and the second communication transmission rate grade corresponding to the predicted transmission rate comprises:
determining, on the basis of the preset uplink analysis rule, a second uplink communication transmission rate grade corresponding to an uplink transmission rate interval to which the predicted uplink transmission rate belongs, and determining, on the basis of the preset downlink analysis rule, a second downlink communication transmission rate grade corresponding to a downlink transmission rate interval to which the predicted downlink transmission rate belongs.

6. The method of claim 5, wherein configuring, on the basis of the second communication transmission rate grade, the downlink guaranteed rate, for the logical channel of the target service priority, of the target base station comprises:
configuring a preset downlink guaranteed rate corresponding to the second communication transmission rate grade as the downlink guaranteed rate, for the logical channel of the target service priority, of the target base station;
wherein instructing, on the basis of the second communication transmission rate grade, the target base station to issue the uplink guaranteed rate for the logical channel of the target service priority to the user terminal comprises:
instructing the target base station to issue a preset uplink guaranteed rate corresponding to the second uplink communication transmission rate grade to the user terminal.

7. The method of claim 6, wherein configuring the preset downlink guaranteed rate corresponding to the second communication transmission rate grade as the downlink guaranteed rate, for the logical channel of the target service priority, of the target base station comprises:
configuring the preset downlink guaranteed rate as the downlink guaranteed rate for the logical channel of the target service priority by configuring a downlink baseband of the target base station.

8. The method of claim 6, wherein instructing the target base station to issue the preset uplink guaranteed rate corresponding to the second uplink communication transmission rate grade to the user terminal comprises:
instructing the target base station to issue to the user terminal a radio resource control protocol connection reconfiguration message carrying a logical channel configuration field, wherein the logical channel configuration field comprises the preset uplink guaranteed rate.

9. The method of any one of claims 1-8, wherein the historical time period comprises a first adjustment period, and the future time period comprises a second adjustment period;
wherein an adjustment period is a time period with a preset duration for periodically adjusting a communication bandwidth, and the second adjustment period is an adjustment period adjacent to the first adjustment period and after the first adjustment period.

10. An electronic device, comprising a memory, a processor, and a computer program stored on the memory and executable on the processor, wherein the program, when executed by the processor, implements steps of the method of any one of claims 1 to 9.

11. A computer-readable storage medium, wherein the computer-readable storage medium stores a computer program, the computer program, when executed by a processor, implements steps of the method of any one of claims 1 to 9.
